# EUROPEAN PATENT APPLICATION

(11) **EP 3 817 318 A1**
(43) Date of publication of application: **05.05.2021**
(21) Application number: 19206790.8
(22) Date of filing: 01.11.2019
(51) Int. Cl.: H04L 29/06, H04L 29/12

(54) **NETWORK OPERATION**

(71) Applicant: British Telecommunications public limited company, London EC1A 7AJ (GB)
(72) Inventor: The designation of the inventor has not yet been filed
(74) Representative: British Telecommunications public limited company Intellectual Property Department

(57) **Abstract**

A method of operating a network is disclosed which mitigates distributed denial of service attacks to a greater degree than conventional approaches. Distributed denial of service attacks are often targeted at a given network address. In networks offering dynamic network address allocation to network devices, this can result in a network address being allocated to a succession of different network devices during the lifetime of a distributed denial of service attack - in part because the attack can overwhelm each network device in turn, in each case causing the network device to relinquish the network address allocated to it. This problem is tackled by identifying a network address subject to a distributed denial of service attack, and then temporarily removing that network address from the pool of network addresses available to network devices. This prevents network devices other than the device having the network address at the start of the DDoS attack from being impacted by the DDoS attack. In an embodiment, identification of targeted network addresses is performed using a classification algorithm generated by applying machine learning techniques to accounting data sent by one or more network gateways to an Authentication, Authorization and Accounting server.

## Description

The present invention relates to a method of operating a network having at least one Internet gateway connected to the Internet, and a plurality of communication links from the Internet gateway to respective customer Internet interfaces. It has particular utility in relation to detecting and mitigating a denial of service attack directed at a customer Internet interface in networks in which addresses are dynamically assigned from common pools to individual customers.

Denial of Service attacks (which include Distributed Denial of Service attacks), are a frequent problem for network operators, and especially Internet Service Providers.

US Patent application 2019/0182266 discloses a technique for analysing data from a number of types of network entities in a network in order to detect a Denial of Service attack. That patent application advocates establishing baseline traffic behaviour of network entities instead of establishing baseline behaviour for given IP addresses. Because the IP address allocated to a network entity can change over time, anomaly detection based on identified network entities is more reliable than anomaly detection based on destination IP address. The patent application does not teach the nature of any mitigation action performed in response to the detection of a denial of service attack. RADIUS data is used to provide a mapping from IP address to network entity.

According to a first aspect of the present invention, there is provided a method of operating a network having at least one Internet gateway connected to the Internet, and a plurality of communication links from the Internet gateway to respective customer Internet interfaces, the method comprising identifying an Internet address which is subject to a denial of service attack; and in response to the identification, at least temporarily preventing the allocation of the Internet address to a customer Internet interface.

By identifying an Internet address which is subject to a denial of service attack; and in response to the identification, at least temporarily preventing the allocation of the Internet address to a customer Internet interface, the passing on of an Internet address from one network entity to another during the denial of service attack is prevented, and hence the denial of service attack on the network is mitigated to a greater degree than has hitherto been the case.

In some embodiments, identifying the Internet address which is subject to a denial of service attack comprises operating each Internet gateway to monitor traffic to or from Internet addresses assigned to customer Internet interfaces accessing the Internet through the Internet gateway, storing traffic data (either the traffic itself or, preferably, data produced by the Internet gateway representing characteristics of the traffic) in a traffic data store, and analysing the traffic data in the traffic data store to identify the Internet address which is subject to a denial of service attack.

Because the number of Internet gateways scales with the size of the network, this provides a more scalable method of providing denial of service detection in large networks.

In some examples of such embodiments, the Internet gateway sends the traffic data to an Authentication, Authorization and Accounting server, the traffic data store being associated with the Authentication, Authorization and Accounting (AAA) server.

This gathers additional value from the conventional activity of sending traffic data to the AAA server - in addition to the traffic data being used for accounting purposes, the traffic data is also used for the purposes of detecting denial of service attacks on the network. By increasing the frequency with which traffic events are sent to the AAA server, the value of the accounting data to denial of service attack detection can be increased.

In some embodiments, the analysis of the traffic data store further comprises deriving Internet address activity indicators from the data in the traffic data store. In refinements of those embodiments, the method further comprises deriving training data for a machine learning process from those derived Internet address activity indicators by using another denial of service detection to indicate a subset of Internet address activity indicators which relate to Internet address activity during a denial of service attack on the Internet address (the remainder of the Internet address activity indicators being taken not to relate to Internet address activity during a denial of service attack).

The advantage of a classification algorithm produced by such a machine learning process is that it can quickly detect a denial of service attack in response to the receipt of a new batch of traffic data (a new batch could be received every second). The other denial of service detection system could be a core network DoS detection system (e.g. an Arbor system from Netscout Systems Inc), or anomaly detection based on the accounting data passed to the AAA server - the accounting data will typically include both an identifier of the customer Internet interface and the IP address used by the customer Internet interface at the time of the accounting event, enabling anomaly-based detection localised to the area served by the Internet gateway.

According to a second aspect of the present invention, there is provided a denial of service detection and mitigation system for use in a network having an Internet gateway connected to the Internet, and a plurality of communication links from the Internet gateway to respective customer Internet interfaces, the system being arranged in operation to identify an Internet address subject to a denial of service attack and at least temporarily prevent the allocation of the Internet address to a customer Internet interface.

There now follows, by way of example only, a description of one or more embodiments of the invention. This description is given with reference to the accompanying drawings, in which:
Figure 1 shows an Internet Service Provider's network;
Figures 2A and 2B show an example of RADIUS event data;
Figure 3 shows the architecture of a Denial of Service Detection and Mitigation Server;
Figure 4 shows an example of IP Address Activity Indicators derived from RADIUS event data;
Figure 5 is a flow-chart of a mitigation technique based on detection of a Denial of Service attack in core network traffic;
Figure 6 is a flow-chart showing the generation of an IP Address Status Classifier from RADIUS accounting data; and
Figure 7 is a flow-chart showing the identification of IP addresses subject to a DoS attack, and consequential mitigation of the DoS attack.

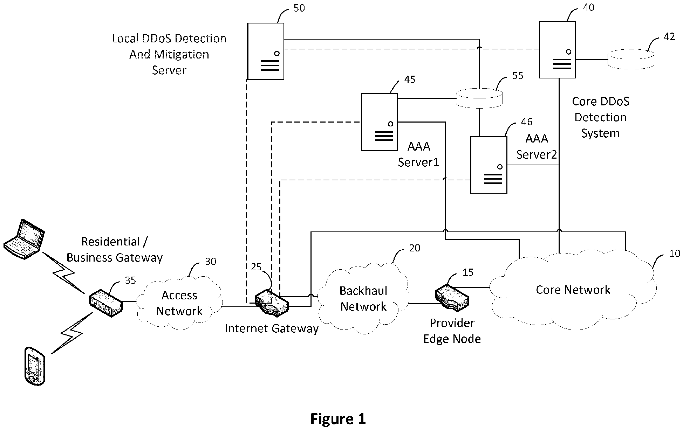

A hierarchical telecommunications network (Figure 1) comprises a core network 10, a number of backhaul networks 20, and a larger number of access networks 30. Each backhaul network 20 is connected to the core network 10 by at least one provider edge node (a router) 15, and each access network 30 is connected to a backhaul network 20 by an Internet gateway 25 (also a router). Each end user of the telecommunications network has a customer Internet interface which is connectable to the access network 30. The customer Internet interface is often Customer Premises Equipment (CPE), such as a business or residential gateway 35 - e.g. the BT Smart Hub®. In other cases, the customer Internet interface might simply be a computer's modem connectable to the access network 30.

The core network 10 includes a core network denial of service detection system 40 (such as a system from the NETSCOUT Arbor range) which collects sample NetFlow data from boundary routers providing interconnection to other networks in the Internet in order to detect denial of service attacks. When such a system detects a denial of service attack, the traffic to the targeted IP address is redirected to the null interface of the boundary router (in other words, it is discarded).

Also connected to the Internet Service Provider's network are one or more Authentication, Authorization and Accounting (AAA) servers 45, 46. As will be understood by those skilled in the art, in order to control access to the Internet, whatever equipment provides the customer's Internet interface (this can be the Customer Premises Equipment (CPE)) will, when it is booted up, or rebooted, send network access credentials to the Internet gateway 25. The Internet gateway 25 will then forward those credentials to an AAA server (in the present example, an AAA server operating in accordance with the RADIUS standard is used), which will indicate to the Internet gateway 25 whether the credentials provided by the customer's equipment are valid. If those credentials are valid, then the Internet gateway 25 will provide the equipment 35 providing the customer's Internet interface with an Internet Protocol (IP) address from one or more pools of IP addresses assigned to the Internet Service Provider, and allocated by the Internet Service Provider to the Internet gateway 25. Once the equipment 35 has an IP address, it is able to send traffic to, and receive traffic from, the Internet.

As AAA servers, the RADIUS servers 45,46 receive from the Internet gateway 25 information on the volume of traffic going to and from each customer's Internet interface (for usage-based charging or placing caps on usage - i.e. the Accounting part of its Authentication, Authorisation and Accounting function).

In the present embodiment, the RADIUS servers 45, 46 store the traffic volume information they receive in a shared database held on persistent storage 55.

In the present example, a local DDoS detection and mitigation server 50 is able to query the data stored in the database. In alternative embodiments, the AAA functions and the AAA-based DDoS attack detection function could be performed by a single computer or virtual machine.

In the present example, connections across the backhaul network 20 carry traffic in Ethernet frames across optical fibres using Wavelength Division Multiplexing. In the access network 30, the Point-to-Point Protocol (PPP) is used by the Internet gateway 25 to bring links to the customer equipment providing a customer Internet interface (e.g. CPE) up and down, and (using the Internet Protocol Control Protocol (IPCP) as the Network Control Protocol (NCP)), to provide an IP address from the pool to the customer equipment 35.

The Internet gateway 25 maintains a table associating the IP address of each customer Internet interface 35 with a calling station identifier that identifies the PPP link which connects the Internet gateway 25 to the customer equipment 35.

As will be understood by those skilled in the art, the Internet gateway 25 sends messages to the AAA server in accordance with the RADIUS protocol at least:
1) on the opening of a PPP link
2) on the PPP link being terminated
3) at interim times (periodically at a time interval from every minute to every few hours)

In practice, PPP links are often open for days or weeks as most customers rarely power down or reboot their customer equipment 35.

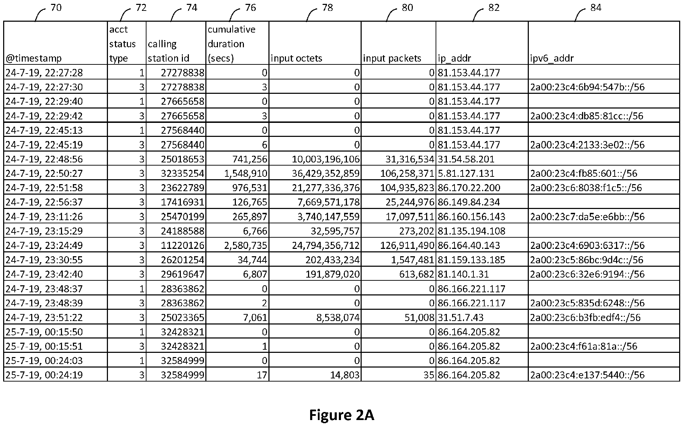

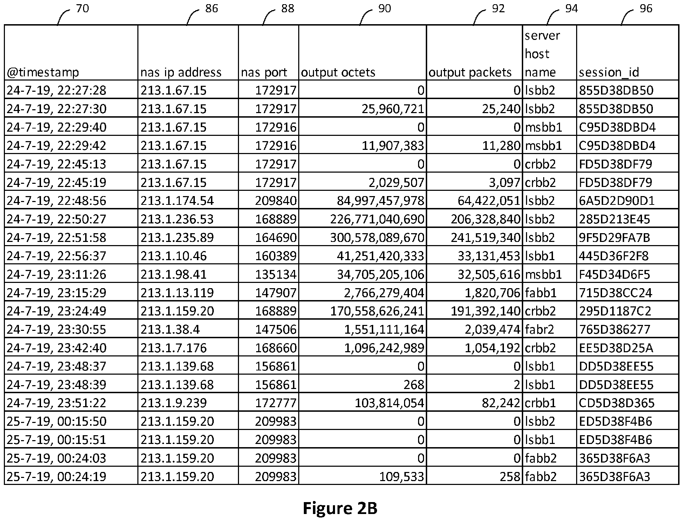

An example of some fields of some RADIUS records which might be collected at the database 55 is shown in Figures 2A and 2B. Each record includes:
i) a timestamp 70;
ii) an indication of the type of RADIUS event 72 (as set out in the list above);
iii) a calling station ID 74;
iv) an indication of the duration 76 of the PPP session up until the last update;
v) a measure of the number of bytes 78 received by the Internet gateway 25 from the customer equipment 35 so far during the PPP session;
vi) a measure of the number of packets 80 received by the Internet gateway 25 from the customer equipment 35 so far during the PPP session;
vii) the IPv4 address 82 assigned to the customer Internet interface;
viii) the IPv6 address 84 assigned to the customer Internet interface;
ix) the IP address 86 of the Internet gateway's interface to the link to the customer equipment 35;
x) the port 88 of the Internet gateway allocated to the link to the customer equipment 35.
xi) a measure of the number of bytes 90 sent by the Internet gateway 25 to the customer equipment 35 so far during the PPP session;
xii) a measure of the number of packets 92 sent by the Internet gateway 25 to the customer equipment 35 so far during the PPP session;
xiii) a name of the RADIUS server 94 from which the record was obtained;
xiv) a PPP session ID.

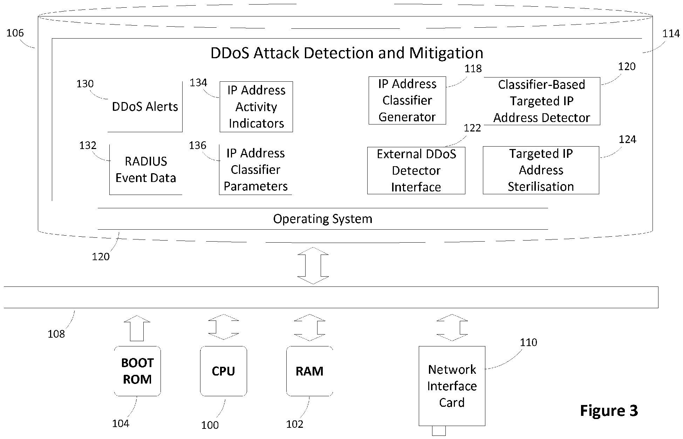

The hardware architecture of the local DDoS detection and mitigation server computer 50 is illustrated in Figure 3. The server computer 50 comprises a central processing unit 100, a volatile memory 102, a read-only memory (ROM) 104 containing a boot loader program, and writable persistent memory - in this case in the form of a solid state disk 106. The processor 100 is able to communicate with each of these memories via a communications bus 108.

Also communicatively coupled to the central processing unit 100 via the communications bus 108 is a network interface card 110. The network interface card 110 provides a communications interface from the server computer 50, via communication links to persistent storage 55 and each of the Internet gateways 25 in the Internet service provider's network.

The solid state disk 106 of the server computer stores an operating system program 120, and a DDoS attack and mitigation application 114 which includes an IP address classification algorithm generator 118, a classification-algorithm-based targeted IP address detector 120, an external DDoS detector interface 122, and a targeted IP address steriliser 124.

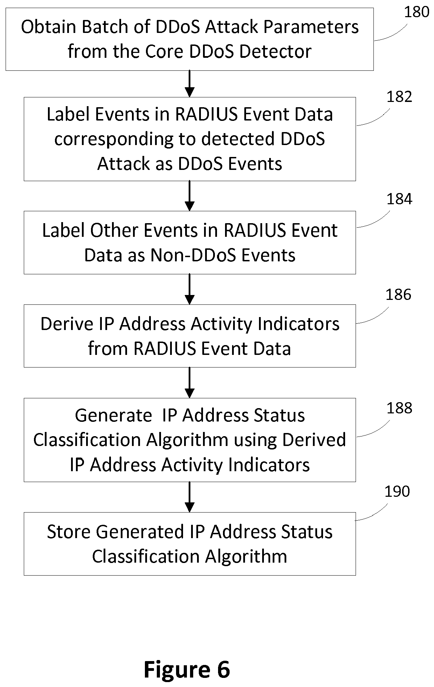

Also stored on the solid state disk 106, is a DDoS alert table 130 having records of DDoS attack alerts, each alert including an alert ID, an IP address which has been adjudged by the core network DDoS detector 40 to be subject to, or have been subjected to, a Denial of Service attack, a start time, and, if applicable, an end time of that attack. Furthermore, the solid state disk 106 stores RADIUS event data 132 from the AAA servers 45, 46 serving the Internet Service Provider's network, IP Address Activity Indicators 134 derived from the RADIUS event data 132, and an IP address classification algorithm 136 derived by combining the DDoS alert table 130 with the IP Address Activity Indicators 134 (as will be explained with reference to Figure 6 below).

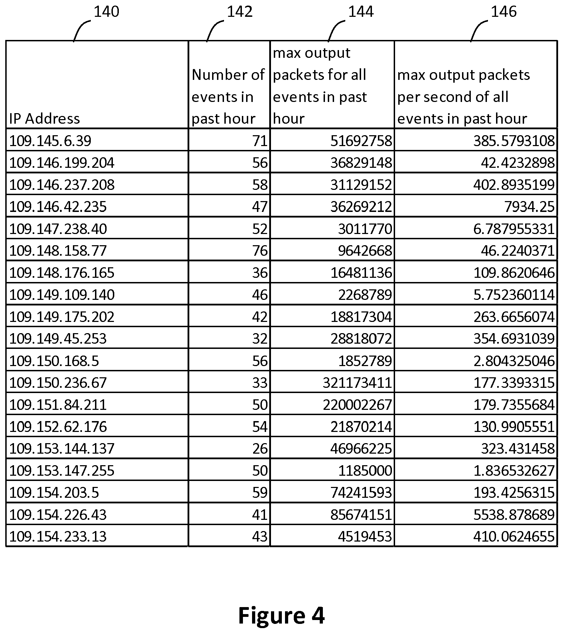

Figure 4 shows an example of records in the IP Address Activity table 134. Each record gives, for each IP address found in the RADIUS data, the number of RADIUS events in (for example) the past hour, the number of packets output to that IP address by the Internet gateway 25 over (for example) the past hour, and the maximum number of output packets sent per second of all the RADIUS events received over (for example) the past hour. Those skilled in the art will realise that the number of events can be obtained simply by querying the database 55 to find how many events in the RADIUS Event Data have the IP address (found in the IP address field of the RADIUS record - e.g Figure 2 : 82 in the case where the IPv4 address is used), similarly the max number of output packets can be obtained using output packets field of the RADIUS event data (Figure 2 : 92) and the max number of output packets sent per second can be obtained by finding the maximum value obtained by dividing the number of output packets (Figure 2 : 92) divided by the cumulative duration (Figure 2 : 76) given in the RADIUS event.

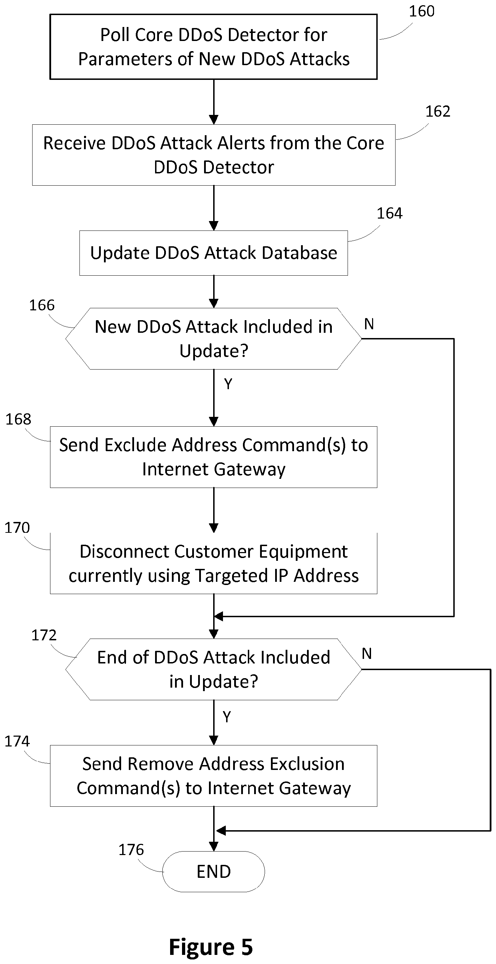

In this example, local Distributed Denial of Service attack mitigation (Figure 5) is performed by the local DDoS Detection and Mitigation Server 50. The mitigation begins with the local DDoS Detection and Mitigation Server 50 polling 160 the core DDoS Detection System 40 to obtain DDoS alerts from the core DDoS detection system 40 (in the present example the server is polled every minute, but the polling could be done more or less frequently than that - e.g. from every second to every ten minutes). As mentioned above in relation to Figure 3, the parameters retrieved 162 and stored 164 include an alert ID, the IP addresses targeted, and the time at which the DDoS attack started and, where applicable, the time at which the DDoS attack ended.

A new ongoing attack test 166 is then carried out to find whether any new DDoS attacks are included in the update from the core DDoS Detector 40 which do not include a stop time (and hence are assumed to be ongoing). If any new attack alerts are included in the update, then the targeted IP address(es) are identified, and the local DDoS detection and mitigation server 50 sends 168 exclude address commands to the Internet gateway 25, which responds by removing the targeted IP addresses from the pool of IP addresses it makes available for customer Internet interfaces. The local DDoS Detection and Mitigation Server 50 then instructs 170 the Internet gateway 25 to terminate the PPP link to the customer equipment 35 currently using the targeted IP address.

It will be seen how removing the targeted IP address from the pool of IP addresses made available for customer Internet interfaces by the Internet gateway (referred to by the applicants as IP address sterilisation) prevents the IP address from being promptly allocated to another customer Internet interface. This ensures that an ongoing DDoS attack is not foisted upon another customer Internet interface during the lifetime of the DDoS attack. In addition, terminating the PPP link to the customer equipment forces the customer equipment to seek a new IP address - which will assuredly not be the targeted IP address because that has been removed from the pool of available addresses in the previous step.

An attack cessation test 172 is then carried out to find whether any DDoS alerts are included in the update from the core DDoS Detector 40 which provide a previously unseen stop time for the DDoS attack. If the update includes an indication that a particular attack (identified by an alert ID) has ended, the local DDoS Detection and Mitigation Server 50 then sends 174 a command to the Internet gateway 25 to remove the address exclusion, and thereby return the Internet address to the pool of Internet addresses offered by the Internet gateway 25 to the customer Internet interfaces.

Returning an IP address to the pool once a DDoS attack has ceased can usefully prevent the pool of IP addresses being depopulated more aggressively than is necessary.

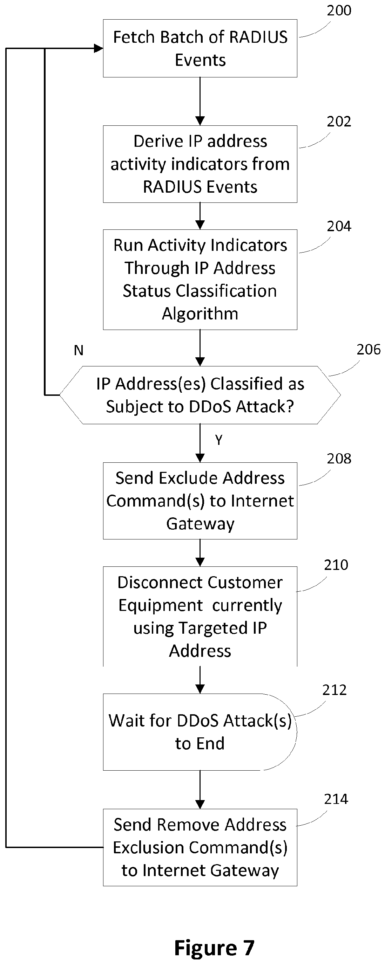

In the present example, the local Distributed Denial of Service Detection and Mitigation Server 50 supplements the DDoS detection provided by the core DDoS detection system 40. This is achieved by using AAA accounting data to generate (Figure 6) an IP address status classification algorithm and then applying that algorithm to identify and mitigate DDoS attacks which might have escaped the core DDoS detection system (Figure 7).

The generation of the IP address status classification algorithm (Figure 6) begins by obtaining 180 a batch of DDoS alerts from the core DDoS Detection System's event log 42. Preferably, the batch relates to over one hundred DDoS attack events in order to provide sufficient accuracy in the generation of the classification algorithm. The parameters included in the downloaded data are the same parameters are described above in relation to the DDoS alert table 130 in the local DDoS Detection and Mitigation Server 40. The RADIUS Accounting data stored in the database 55 is then queried (in this example using the search engine Elasticsearch) to extract RADIUS data matching the targeted IP address and time of the attack. This provides a set of RADIUS events that are labelled 182 as DDoS events. The other RADIUS events relating to the given time period are labelled 184 as non-DDoS events. Both sets of RADIUS events are then processed 186 to group the events by IP address and derive classified Internet address activity indicators (Figure 4) for each IP address - in addition to the fields given (by way of example) in Figure 4 the derived data includes a classification of 'subject to DDoS attack' / 'not subject to DDoS attack' for each IP address. In this example, Label Propagation from the Scikit-Learn package provided with the Python programming language is used to generate 188 the IP address status classification algorithm, which maps between Internet address activity indicators and the classifications of 'subject to DDoS attack' / 'not subject to DDoS attack'. The generated classification algorithm is stored 190 by the local Distributed Denial of Service Detection and Mitigation Server 50. In other embodiments, Naïve Bayes or Logistic Regression could be used instead of the Label Propagation machine learning algorithm to generate an IP address status classification algorithm from a training set of classified Internet address activity indicators. More generally, any semi-supervised machine learning algorithm could be used. Indeed, in some embodiments, a simple linear function of the values found in the IP address activity indicators could be compared with a threshold to arrive at a classification of IP address activity indicators. As will be understood by those skilled in the art, the classified Internet address activity indicators not used in the training set -- can be used as a test subset to test the accuracy of the generated classification algorithm.

The application of the RADIUS-based IP address status classification algorithm (Figure 7) begins with the local DDoS Detection and Mitigation Server 50 fetching 200 a batch of RADIUS events from the database 55. These are processed 202 to derive IP address activity indicators as was described above (Figure 6 : 186) in relation to the generation of the classification algorithm. The generated IP address activity indicators are then run through the previously generated classification algorithm to classify 204 each IP address as subject to a DDoS attack or not. If a test 206 then finds that none of the IP address are subject to a DDoS attack, then once a predetermined time period has elapsed (for example every one to five minutes), a new batch of RADIUS events are fetched and the cycle (200 to 204) is repeated. If, on the other hand, the test 206 finds that one or more addresses are subject to a DDoS attack, then the attacked IP address are removed and later reinstated to the pool of IP addresses made available to customer Internet interfaces as described above in relation to Figure 5.

It will be seen how the RADIUS-based DDoS detection can supplement the DDoS detection provided by the core DDoS detection system.

Possible variations on the above embodiment include (this list is by no means exhaustive):
i) the Internet gateway could communicate directly with the core network DDoS detection system 40;
ii) in the above embodiment the Internet gateway offered an exclude address functionality. However, even when an Internet gateway doesn't offer an exclude address functionality, if it allows the deletion and creation of pools of IP addresses, a similar effect can be achieved by deleting a pool of IP addresses containing the targeted IP address. Furthermore, where IP address masking enables pools of differing sizes to be defined, then pool deletion and/or pool creation can remove the IP address from the pool of IP addresses whilst maintaining non-targeted IP addresses in the pool even when the targeted IP address lies in or near the middle of the pool of addresses;
iii) in alternative embodiments, the core network DDoS detection system could be dispensed with, with the identification of targeted IP addresses instead being based on anomaly detection based on the RADIUS data;
iv) in the above embodiment, the classification algorithm was generated and ran on Internet address activity indicators derived from the RADIUS events. However, in alternative embodiments the inputs for the classification algorithm could be the RADIUS events themselves;
v) Rather than being provided by Internet gateway and dynamically allocated using IPCP, IP address allocation could use a different protocol (e.g. DHCP) and could be provided by a separate server;
vi) the above embodiment applied to either or both Internet Protocol v4 and Internet Protocol v6 - variations of the above embodiment could be applied to networking protocols other than the Internet Protocol;
vii) in the above embodiment, all the derived Internet address activity indicators relate to quantitative metrics, but they could be qualitative, or Boolean values (e.g. event duration > threshold).
viii) in the above described embodiment, the classification of IP address status performed by the local DDoS Attack Detection and Mitigation Server 50 was a binary classification - either the IP address is subject to a DDoS attack or it isn't. In other embodiments, the output of the classification algorithm might be a likelihood of the presence of a DDoS attack on that IP address.
ix) in some embodiments, the supplementary DDoS detections provided by the RADIUS-based DDoS detection could simply generate an alert to a network administrator. In more complicated embodiments, where the classifier gives a likelihood of the presence of a DDoS attack on an IP address, a likelihood of between a lower threshold and a higher threshold (e.g. 10 and 50% (say)) might trigger an alert to a network administrator, whereas a likelihood greater than the higher threshold might trigger the exclusion of the Internet address from the pool of Internet addresses made available to for customer Internet interfaces.
x) In the above embodiment, the core DDoS detection system is configured to conclude that an attack has ended once the traffic levels addressed to the targeted IP address fall below trigger thresholds for (say) four minutes. However, the applicant has seen that there is also a need for a system which handles repeated attacks on the same IP address in quick succession. Hence, in an alternative embodiment, the mitigation is enhanced by a procedure to quarantine an IP address which is subject to repeated attacks, for a longer time period (30 mins to 24 hours say). In such embodiments, other processes which might seek to reintroduce the quarantined IP address to the pool of addresses used by the Internet gateway might need to be modified or postponed in order to prevent the reintroduction of the quarantined IP address to the pool.
xi) in the above embodiment, the traffic data analysed in order to identify the Internet address which is subject to a denial of service attack was the per-IP address accounting data gathered by the Internet gateway and sent to a AAA server. In other embodiments, the Internet gateway could gather traffic data in other ways. For example, traffic volume information such as packets or bytes sent to a given IP address, could be repeatedly obtained by the local DDoS detection and mitigation server using a Simple Network Management Protocol query to the Internet gateway.

In summary of the above disclosure, a method of operating a network is disclosed which mitigates distributed denial of service attacks to a greater degree than conventional approaches. Distributed denial of service attacks are often targeted at a given network address. In networks offering dynamic network address allocation to network devices, this can result in a network address being allocated to a succession of different network devices during the lifetime of a distributed denial of service attack - in part because the attack can overwhelm each network device in turn, in each case causing the network device to relinquish the network address allocated to it. This problem is tackled by identifying a network address subject to a distributed denial of service attack, and then temporarily removing that network address from the pool of network addresses available to network devices. This prevents network devices other than the device having the network address at the start of the DDoS attack from being impacted by the DDoS attack. In an embodiment, identification of targeted network addresses is performed using a classification algorithm generated by applying machine learning techniques to accounting data sent by one or more network gateways to an Authentication, Authorization and Accounting server.

## Claims

1. A method of operating a network having at least one Internet gateway connected to the Internet, and a plurality of communication links from the Internet gateway to respective customer Internet interfaces, the method comprising:
identifying an Internet address which is subject to a denial of service attack; and
in response to the identification, at least temporarily preventing the allocation of the Internet address to a customer Internet interface.

2. A method according to claim 1 wherein identifying the Internet address which is subject to a denial of service attack comprises:
operating each Internet gateway to monitor traffic to or from Internet addresses assigned to customer Internet interfaces accessing the Internet through the Internet gateway;
storing traffic data in a traffic data store; and
analysing the traffic data in said traffic data store to identify the Internet address which is subject to a denial of service attack.

3. A method according to claim 2 in which the Internet gateway sends the traffic data to an Authentication, Authorization and Accounting server, the traffic data store being associated with the Authentication, Authorization and Accounting server.

4. A method according to claim 3 in which the analysis of the traffic data store further comprises deriving Internet address activity indicators from the data in the traffic data store.

5. A method according to claim 4 further comprising deriving training data for a machine learning process from derived Internet address activity indicators which another denial of service detection system indicates relate to Internet address activity when the Internet address is subject to a denial of service attack.

6. A method according to claim 5 wherein training data is input to a machine learning process to generate a classification algorithm to process the derived Internet address activity indicators to identify the Internet address which is subject to a denial of service attack.

7. A method according to claim 6 in which the analysis of the traffic data uses the generated classification algorithm.

8. A denial of service detection and mitigation system for use in a network having an Internet gateway connected to the Internet, and a plurality of communication links from the Internet gateway to respective customer Internet interfaces, the system being arranged in operation to identify an Internet address subject to a denial of service attack and at least temporarily prevent the allocation of the Internet address to a customer Internet interface.

9. A system according to claim 8 comprising a denial of service attack detector and an Internet address allocator in communication with the denial of service attack detector, in which:
i) the denial of service attack detector is arranged in operation to identify an Internet address subject to a denial of service attack;
ii) the system is arranged in operation to pass a message indicating the identified Internet address from the denial of service attack detector to the Internet address allocator; and
iii) the Internet address allocator is arranged in operation to temporarily prevent the allocation of the identified Internet address to a customer Internet interface.

10. A system according to claim 9 in which the prevention of allocation involves removing the identified address from the pool of Internet addresses available to customer Internet interfaces.

11. A computer program product comprising instructions which, when the program is executed by a computer, cause the computer to carry out the method of any one of claims 1 to 7.

12. A computer-readable data carrier having stored thereon the computer program of Claim 11.
